# EUROPEAN PATENT APPLICATION

(11) **EP 4 548 819 A1**
(43) Date of publication of application: **07.05.2025**
(21) Application number: 23207513.5
(22) Date of filing: 02.11.2023
(51) Int. Cl.: A47J 31/44, A47J 31/60

(54) **FROTHING APPLIANCE**

(71) Applicant: B/E Aerospace, Inc., Winston Salem, NC 27105 (US)
(72) Inventor: PANJER, Frederik Adrian Stephan, 3953BW Maarsbergen (NL); PEREZ CAMACHO, Manuel, 3431BH Nieuwegein (NL)
(74) Representative: Dehns

(57) **Abstract**

A frothing appliance (100) includes a housing (102) having a recess (102a), a froth wand (104), wherein the froth wand (104) has a longitudinal axis (A). The frothing appliance (100) also includes means for retracting the froth wand (104), along the longitudinal axis (A), into the recess (102a) of the housing (102), and means for cleaning the froth wand (104) when the froth wand (104) is fully or partially retracted into the recess (102a) of the housing (102).

## Description

### TECHNICAL FIELD

The examples shown herein relate generally to a frothing appliance for frothing liquid to be consumed with e.g. coffee, hot chocolate and the like. In particular, the examples show a frothing appliance that has cleaning capabilities.

### BACKGROUND

Frothing appliances are used to froth liquid to be consumed with e.g. coffee, hot chocolate and the like. Frothing appliances can be located on a coffee machine, an espresso machine, or may be standalone. Frothing appliances (e.g. froth wands) can be placed within the liquid to be frothed and, generally, use steam to froth the liquid (e.g. milk), in use. A drawback of such frothing appliances is that residue of the frothed liquid can remain, and build up, on the appliances during the lifetime of the appliance. Therefore, frothing appliances can be cumbersome to clean and require thorough manual cleaning throughout the lifetime of the appliance. Cleaning frothing appliances is also time-consuming after each single use. There is therefore a need for an improved frothing appliance that also has cleaning capabilities.

### SUMMARY

A frothing appliance includes a housing having a recess, a froth wand, wherein the froth wand has a longitudinal axis, A. The frothing appliance also includes means for retracting the froth wand, along the longitudinal axis, A, into the recess of the housing, and means for cleaning the froth wand when the froth wand is fully or partially retracted into the recess of the housing.

The froth wand may include a plurality of portions arranged in a telescopic manner and wherein the plurality of portions include at least one magnetic or ferromagnetic material. The means for retracting the froth wand may include at least one solenoid that is configured to switch between an on and an off mode. In the on mode, a magnetic field may be provided around the housing to attract the at least one magnetic or ferromagnetic material such that at least one of the plurality of portions move along the longitudinal axis and into the recess of the housing. The plurality of portions may include a first portion coupled to an inner surface of the housing, a second portion configured to move along the longitudinal axis, A, within the first portion, a third portion configured to move along the longitudinal axis, A, within the second portion, and a fourth portion configured to move along the longitudinal axis, A, within the third portion.

The frothing appliance may include a radial axis, r. The first portion may include a first portion flange that extends inwardly along the radial axis, r, from the first portion. A first sealing ring may be coupled to an upper surface of the first flange portion. The second portion may include a second portion first flange that extends outwardly along the radial axis, r, from the second portion. The second portion first flange may be configured to rest, in an extended state and when the at least one solenoid is in the off mode, on the first sealing ring, and the second portion may include a second portion second flange that extends inwardly along the radial axis, r, from the second portion. A second sealing ring may be coupled to an upper surface of the second portion second flange. The third portion may include a third portion first flange that extends outwardly along the radial axis, r, from the third portion. The third portion first flange may be configured to rest, in the extended state and when the at least one solenoid is in the off mode, on the second sealing ring, and the third portion may include a third portion second flange that extends inwardly along the radial axis, r, from the third portion. A third sealing ring may be coupled to an upper surface of the third portion second flange. The fourth portion may include a fourth portion first flange that extends outwardly along the radial axis, r, from the fourth portion. The fourth portion first flange may be configured to rest, in the extended state and when the at least one solenoid is in the off mode, on the third sealing ring, and the fourth portion may include a fourth portion second flange that extends inwardly along the radial axis, r, from the third portion. The fourth portion second flange may define an outlet.

A first magnetic or ferromagnetic material may be included on a surface of the second portion first flange. A second magnetic or ferromagnetic material may be included on a surface of the third portion first flange. A third magnetic or ferromagnetic material may be included on a surface of the fourth portion first flange.

When the at least one solenoid is in the on mode, the first magnetic or ferromagnetic material may be within range of a magnetic field, MF, such that the second portion may be configured to move into the recess. When the second portion is within the recess, and when the at least one solenoid is in the on mode, the second magnetic or ferromagnetic material may be within range of the magnetic field, MF, such that the third portion may be configured to move into the recess. When the third portion is within the recess, and when the at least one solenoid is in the on mode, the third magnetic or ferromagnetic material may be within range of the magnetic field, MF, such that the fourth portion may be configured to move into the recess.

The means for cleaning may include at least one nozzle located in the recess of the housing. Steam may be provided from the at least one nozzle and into the recess. At least one stop may be provided on the inner surface of the housing.

The frothing appliance may also include a spring that extends from an inner surface of the housing to the froth wand. The spring may extend from the inner surface of the housing to an upper surface of the fourth portion first flange.

In another aspect, there is provided a hot beverage dispensing machine (e.g. coffee, hot chocolate etc.) that includes the frothing appliance described above.

In another aspect there is provided a method that includes providing a housing having a recess, providing a froth wand, wherein the froth wand has a longitudinal axis, retracting the froth wand, along the longitudinal axis, into the recess of the housing, and cleaning the froth wand when the froth wand is retracted into the recess of the housing.

A method of using the frothing appliance described above may also include activating the means for retracting the froth wand such that the froth wand is retracted fully or partially into the recess of the housing, activating the means for cleaning when the froth wand is retracted fully or partially into the recess of the housing such that the froth wand is cleaned.

### BRIEF DESCRIPTION OF THE DRAWINGS

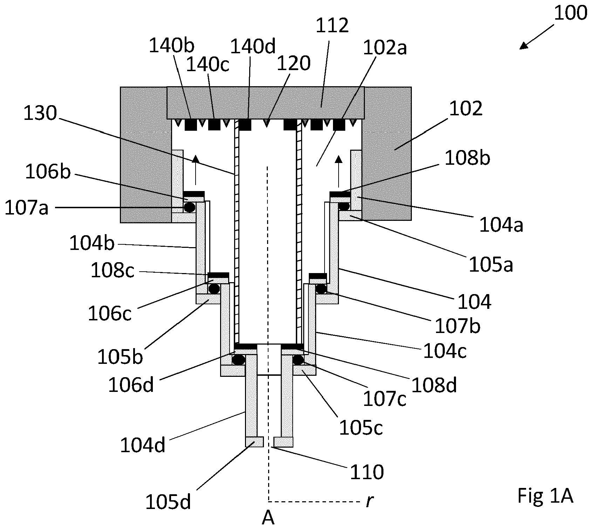

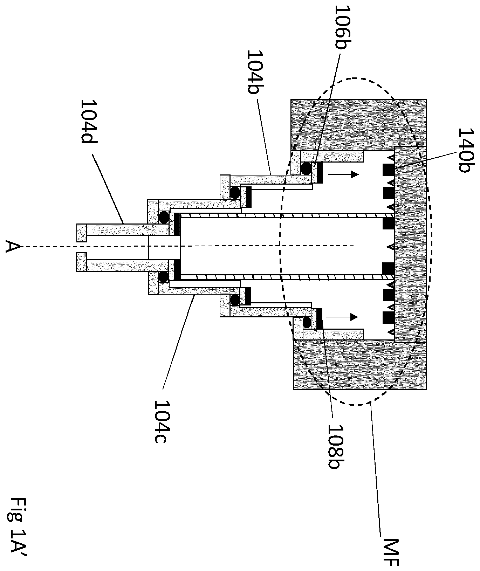

Fig. 1A shows an example cross-section of a frothing appliance.
Fig. 1A' shows an example of the frothing appliance of Fig. 1A, in use.

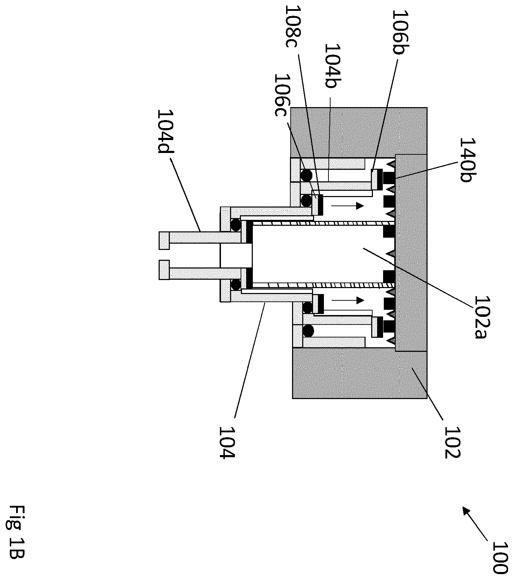

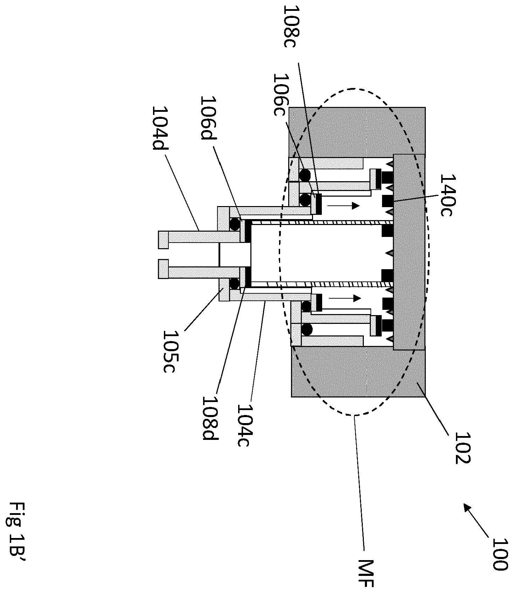

Fig. 1B shows a further example of the frothing appliance of Fig. 1A.
Fig. 1 B' shows the frothing appliance of Fig. 1B, in use.

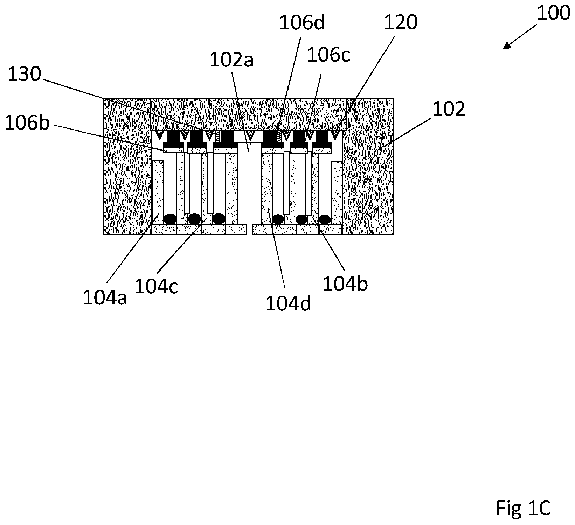

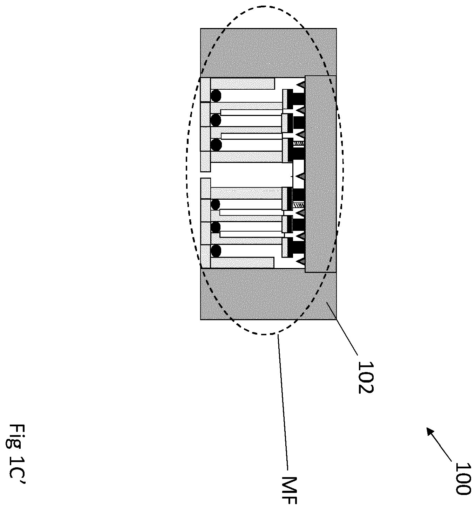

Fig. 1C shows a further example of the frothing appliance of Figs. 1A and 1B.
Fig. 1C' shows the frothing appliance of Fig. 1C, in use.

### DETAILED DESCRIPTION

Figs 1A-1C' generally show a frothing appliance 100 that can be integrated with a coffee machine, a drinks dispenser or the like. The frothing appliance 100 may also be a standalone appliance or a modular appliance that can be fitted to an existing coffee machine, drinks dispenser or the like.

Fig. 1A shows an example of a frothing appliance 100. The frothing appliance 100 includes a housing 102 that has a recess 102a. The frothing appliance 100 also includes a froth wand 104 that has a longitudinal axis, A, and a radial axis, r. The froth wand 104 is configured to retract and extend along the longitudinal axis A, as will be described in more detail below. Fig. 1A shows the froth wand 104 in a fully extended state.

The frothing appliance 100, generally, includes means for retracting and extending the froth wand 104 into, and out of, the recess 102a of the housing 102. In general, when the froth wand 104 is fully, or partially, retracted into the recess 102a of the housing 102, means for cleaning the froth wand allows for cleaning of the froth wand 104 when it is fully, or partially, retracted into the recess 102a of the housing 102, as will be described in more detail below.

As shown in Fig. 1A, the froth wand 104 may include a at least one froth wand portion. For example, the froth wand 104 includes a first portion 104a, a second portion 104b, a third portion 104c and a fourth portion 104d. The froth wand 104, including the first portion 104a, the second portion 104b, the third portion 104c, and the fourth portion 104d may be cylindrical in nature, but other shapes are envisaged. In general, the first portion 104a, the second portion 104b, the third portion 104c and the fourth portion 104d of the froth wand 104 may retract and extend along the longitudinal axis, A, in a manner similar to a telescopic arm.

In the example shown in Fig. 1A, the first portion 104a may be fixed to the housing 102 such that it is contained within the recess 102a of the housing. The first portion 104a may include a first portion flange 105a that extends inwardly along the radial axis, r, from the first portion 104a. In the example shown in Figure 1A, the first portion flange 105a is located at the bottom of the first portion 104a. A first sealing ring 107a may be coupled to an upper surface the first portion flange 105a. In the example shown in Fig. 1A, the first portion flange 105a is located at the bottom of the housing 102 and the first portion flange 105a extends inwardly along the radial axis, *r*, into the bottom of the recess 102a.

As shown in Fig. 1A, the second portion 104b of the froth wand 104 may include a second portion first flange 106b and a second portion second flange 105b. The second portion first flange 106b may be located at the top of the second portion 104b and extends outwardly along the radial axis, r. As mentioned above, Fig. 1A shows the froth wand 104 in a fully extended state. Therefore, in the example shown in Fig. 1A, the second portion first flange 106b is positioned to be resting on the first sealing ring 107a. Since the second portion first flange 106b is resting on the first sealing ring 107a, which is coupled to an upper surface of the first portion flange 105a, leaks are prevented between the first portion 104a and the second portion 104b of the froth wand 104. The second portion first flange 106b may also be flush with the first portion 104a. Therefore, leaks are prevented between the first portion 104a and the second portion 104b of the froth wand 104.

The second portion 104b of the froth wand 104 may include a second portion second flange 105b. The second portion second flange 105b may be located at the bottom of the second portion 104b and extends inwardly along the radial axis, r, from the second portion 104b. In the example shown in Figure 1A, the second portion second flange 105b is located at the bottom of the second portion 104b. A second sealing ring 107b may be coupled to an upper surface the second portion second flange 105b.

As shown in Fig. 1A, the third portion 104c of the froth wand 104 may include a third portion first flange 106c and a third portion second flange 105c. The third portion first flange 106c may be located at the top of the third portion 104c and extends outwardly along the radial axis, *r*. As mentioned above, Fig. 1A shows the froth wand 104 in a fully extended state. Therefore, in the example shown in Fig. 1A, the third portion first flange 106c is positioned to be resting on the second sealing ring 107b. Since the third portion first flange 106c is resting on the second sealing ring 107a, which is coupled to an upper surface of the second portion second flange 105b, leaks are prevented between the second portion 104b and the third portion 104c of the froth wand 104. The third portion first flange 106c may also be flush with the second portion 104b. Therefore, leaks are prevented between the second portion 104b and the third portion 104c of the froth wand 104.

The third portion 104c of the froth wand 104 may include a third portion second flange 105c. The third portion second flange 105c may be located at the bottom of the third portion 104c and extends inwardly along the radial axis, r, from the third portion 104c. In the example shown in Figure 1A, the third portion second flange 105c is located at the bottom of the third portion 104c. A third sealing ring 107c may be coupled to an upper surface the third portion second flange 105c.

As shown in Fig. 1A, the fourth portion 104d of the froth wand 104 may include a fourth portion first flange 106d and a fourth portion second flange 105d. The fourth portion first flange 106d may be located at the top of the fourth portion 104d and extends outwardly along the radial axis, *r*. As mentioned above, Fig. 1A shows the froth wand 104 in a fully extended state. Therefore, in the example shown in Fig. 1A, the fourth portion first flange 106d is positioned to be resting on the third sealing ring 107c. Since the fourth portion first flange 106d is resting on the third sealing ring 107c, which is coupled to an upper surface of the third portion second flange 105c, leaks are prevented between the third portion 104c and the fourth portion 104d of the froth wand 104. The fourth portion first flange 106d may also be flush with the third portion 104c. Therefore, leaks are prevented between the third portion 104c and the fourth portion 104d of the froth wand 104.

The fourth portion 104d of the froth wand 104 may include a fourth portion second flange 105d. The fourth portion second flange 105d may be located at the bottom of the fourth portion 104d and extends inwardly along the radial axis, r, from the fourth portion 104d. In the example shown in Figure 1A, the fourth portion second flange 105d is located at the bottom of the fourth portion 104d. The fourth portion second flange 105d may define an outlet 110 of the froth wand 104.

In the extended state, steam can be passed through the froth wand 104 via at least one nozzle 120 located in the recess 102a of the housing 102. As shown in Fig. 1A, the at least one nozzle 120 is located on an inner surface 112 of the housing 102. The at least one nozzle 120 may be located at the top of the recess 102a of the housing 102, as shown in Fig. 1A. The at least one nozzle 120 may also extend into the recess 102a along the longitudinal axis, A. The at least one nozzle may also be provided on an inner surface (not shown) of the housing 102 that may allow for the at least one nozzle to extend into the recess 102a of the housing 102 along the radial axis, r.

The froth wand 104 may include at least one magnetic or ferromagnetic material that can be used to retract and extend the froth wand 104. For example, a first magnetic or ferromagnetic material 108b may be included on a surface of the second portion first flange 106b, a second magnetic or ferromagnetic material 108c may be included on a surface of the third portion first flange 106c, and a third magnetic or ferromagnetic material 108d may be included on a surface of the fourth portion first flange 106d. The first magnetic or ferromagnetic material 108b, second magnetic or ferromagnetic material 108c and the third magnetic or ferromagnetic material 108d may be a ferromagnetic ring. The housing 102 may be, or include, a solenoid that is configured to switch between an on and off mode, where, in the on mode, a magnetic field is provided around the housing 102 to attract the at least one magnetic or ferromagnetic material such that the froth wand 104 may be retracted and extended, as described in further detail below. In the off mode, the magnetic field is not present.

A spring 130 may be provided extending from the inner surface 112 of the housing 102, along the longitudinal axis, A, of the froth wand 104 to maintain the froth wand 104 in an extended state. In the example shown in Fig. 1A, the spring 130 extends from the inner surface 112 of the housing 102 to an upper surface of the fourth portion first flange 106d. Of course, if there were more, or less, than four portions in the froth wand 104, the spring 130 could extend from the inner surface 112 of the housing 102 to any of these portions. The spring 130 is entirely optional and, in the absence of a spring 130, the at least one portion within the froth wand 104 could extend due to the force of gravity and/or steam pressure.

At least one end stop may be provided on the inner surface 112 of the housing 102 to prevent the at least one portion of the froth wand 104 from extending to the at least one nozzle 120. For example, and as shown in Fig. 1A, a first end stop 140b is in line with the second portion first flange 106b, a second end stop 140c is in line with the third portion first flange 106c, and a third end stop 140d is in line with the fourth portion first flange 106d. Therefore, as an example, the second portion first flange 106b, the third portion first flange 106c, and the fourth portion first flange 106d are prevented from contacting the at least one nozzle 120 that provides steam.

Referring now to Fig. 1A', in conjunction with Fig. 1A, a magnetic field, MF, is provided around the housing 102 by the solenoid. When the magnetic field, MF, is activated, the second portion first flange 106b is in range of the magnetic field, MF, and the first magnetic or ferromagnetic material 108b causes the second portion 104b to move along the longitudinal axis, A, and towards the first end stop 140b (e.g. in the direction of the arrows shown within the recess 102a of the housing 102). In turn, third portion 104c and fourth portion 104d also move upwards along the longitudinal axis, A, due to the arrangement of the flanges. For example, and referring to Fig. 1A, the upward force of the second portion second flange 105b causes the third portion first flange 106c to also move upwards. Likewise, the upward force of the third portion second flange 105c causes the fourth portion first flange 106d to also move upwards.

Referring now to Fig. 1B, an intermediate phase of retracting the froth wand 104 is shown as an example. As can be seen in Fig. 1B, the second portion 104b has been retracted into the recess 102a of the housing 102 such that the second portion first flange 106b is in contact with the first end stop 140b. It is envisaged that the second portion 104b is fully, or partially, contained in the recess 102a. Now that the second portion 104b has been retracted into the recess 102a, the third portion first flange 106c and the second magnetic or ferromagnetic material 108c are within the area surrounding the housing 102. As shown in Fig. 1B', the third portion first flange 106c and the second magnetic or ferromagnetic material 108c are within the magnetic field, MF. When the magnetic field, MF, is activated, the third portion first flange 106c is in range of the magnetic field, MF, and the second magnetic or ferromagnetic material 108c causes the third portion 104c to move along the longitudinal axis, A, and towards the second end stop 140c (e.g. in the direction of the arrows shown within the recess 102a of the housing 102). In turn, the fourth portion 104d also move upwards along the longitudinal axis, A, due to the arrangement of the flanges. For example, and referring to Fig. 1A, the upward force of the third portion second flange 105c causes the fourth portion first flange 106d to also move upwards. Once the third portion 104c has moved into the recess 102a, the fourth portion first flange 106d and the third magnetic or ferromagnetic material 108c will then be within the area surrounding the housing 102 and, similar to as described above, when the magnetic field, MF, is activated, the fourth portion 104d will also move into the recess 102a of the housing 102.

As shown in Fig. 1C, the froth wand is now in a fully retracted state. The first portion 104a, second portion, 104b, third portion 104c and fourth portion 104d are all provided in the recess 102a of the housing 102. The second portion first flange 106b, the third portion first flange 106c and the fourth portion first flange 106d are in contact with their respective end stops (shown as 140b, 140c and 140d in Fig. 1A). As shown in Fig. 1C, the entirety of the first portion 104a, second portion 104b, third portion 104c and fourth portion 104d (including their respective flanges, as described above) are contained within the recess 102a of the housing 102. Of course, it is to be understood that the portions of the froth wand may be partially contained in the recess 102a of the housing 102. If a spring 130 is present, this would now be fully compressed, as shown in Fig. 1C. As shown in Fig. 1C', in conjunction with Fig. 1C, the magnetic field, MF, ensures that the first portion 104a, the second portion 104b, the third portion 104c and the fourth portion 104d are maintained in the recess 102a of the housing 102.

Once the froth wand 104 is in the fully retracted state, a cleaning process may begin. Steam is provided from the at least one nozzle 120 (e.g. the nozzle shown in Fig. 1C) into the recess 102a of the housing 102. Due to the proximity of the at least one portion of the froth wand 104 in the recess 102a of the housing 102, the force of the steam from the nozzle provides cleaning to all components of the froth wand 104. For example, in this fully retracted state, both the outer parts and the inner parts of the froth wand 104 (including the seal rings) are exposed to the force of the steam which will clean the froth wand 104 completely (e.g. all internal and external components). Of course, the cleaning process may be initiated at any point of retraction of the froth wand 104 and is not necessarily limited to the froth wand 104 being in a fully retracted state (e.g. the cleaning process may be initiated when the froth wand 104 is at an intermediate phase, as shown in Fig. 1B).

After the cleaning process has been completed, the solenoid in the housing 102 may be deactivated and the at least one portion of the froth wand 104 may, due to gravity, return to a fully extended state (e.g. the state shown in Fig. 1A) by at least one portion of the froth wand 104 moving downward along the longitudinal axis, A. As mentioned above, a spring 130 may be present. When a spring 130 is present, the spring moves from a compressed state to an extended state and the spring assists in moving the fourth portion 104d downward along the longitudinal axis, A, which, in turn, causes the third portion 104c and second portion 104d to move out of the recess 102a and downward along the longitudinal axis until the second portion first flange 106b is in contact with the first portion flange 105a. Similarly, when the solenoid in the housing 102 is deactivated, steam may be used to return the froth wand 104 to a fully extended state. For example, the pressure of the steam may cause the fourth portion 104d to move downward along the longitudinal axis, A, which, in turn, causes the third portion 104c and second portion 104b to move out of the recess 102a and downward along the longitudinal axis until the second portion first flange 106b is in contact with the first portion flange 105a.

The frothing appliance 100, as described above, may be a standalone frothing appliance or may be provided to be installed on to a coffee machine, a drinks dispenser or the like. Further, the frothing appliance 100 may be integrated into a coffee machine, a drinks dispenser or the like. The frothing appliance 100 may include a controller (not shown) that can control the solenoid within the housing 102 to automatically clean the froth wand 104 after a certain period of time or after a certain number of froth cycles. Further, a user could provide instructions to the frothing appliance 100 for the cleaning process to be initiated.

Advantageously, the frothing appliance described above saves a user valuable time, provides an automated self-cleaning froth wand that can be used on its own or with a coffee machine, drinks dispenser, or the like. Although the frothing appliance allows for self-cleaning, it is to be understood that the self-cleaning process is not only for removing frothing residues or particles from the froth want but it also makes use of steam to decontaminate and kill harmful microorganisms and prevent growth of harmful microorganisms. Further, the frothing appliance reduces waste since no parts would need to be replaced. Further, the frothing appliance reduces waste in that no external cleaning agents and/or cleaning cloths are required to clean the frothing appliance.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. A frothing appliance (100), comprising:
a housing (102) having a recess (102a);
a froth wand (104), wherein the froth wand (104) has a longitudinal axis (A);
means for retracting the froth wand (104), along the longitudinal axis (A), into the recess (102a) of the housing (102); and
means for cleaning the froth wand (104) when the froth wand (104) is fully or partially retracted into the recess (102a) of the housing (102).

2. The frothing appliance (100) of claim 1, wherein the froth wand (104) comprises a plurality of portions (104a, 104b, 104c, 104d) arranged in a telescopic manner and wherein the plurality of portions (104a, 104b, 104c, 104d) include at least one magnetic or ferromagnetic material (108b, 108c, 108d).

3. The frothing appliance (100) of claim 2, wherein the means for retracting the froth wand (104) comprises at least one solenoid that is configured to switch between an on and an off mode, wherein, in the on mode, a magnetic field is provided around the housing (102) to attract the at least one magnetic or ferromagnetic material (108b, 108c, 108d) such that at least one of the plurality of portions (104b, 104c, 104d) move along the longitudinal axis and into the recess (102a) of the housing (102).

4. The frothing appliance (100) of claim 3, wherein the plurality of portions (104a, 104b, 104c, 104d) comprises:
a first portion (104a) coupled to an inner surface of the housing (102);
a second portion (104b) configured to move along the longitudinal axis, A, within the first portion (104a);
a third portion (104c) configured to move along the longitudinal axis, A, within the second portion (104b); and
a fourth portion (104d) configured to move along the longitudinal axis, A, within the third portion (104c).

5. The frothing appliance (100) of claim 4, wherein the frothing appliance includes a radial axis, r, and wherein:
the first portion (104a) includes a first portion flange (105a) that extends inwardly along the radial axis, r, from the first portion (104a), and wherein a first sealing ring (107a) is coupled to an upper surface of the first flange portion (105a);
the second portion (104b) includes a second portion first flange (106b) that extends outwardly along the radial axis, r, from the second portion (104b), wherein the second portion first flange (106b) is configured to rest, in an extended state and when the at least one solenoid is in the off mode, on the first sealing ring (107a), and wherein the second portion (104b) includes a second portion second flange (105b) that extends inwardly along the radial axis, r, from the second portion (104b), and wherein a second sealing ring (107b) is coupled to an upper surface of the second portion second flange (105b);
the third portion (104c) includes a third portion first flange (106c) that extends outwardly along the radial axis, r, from the third portion (104c), wherein the third portion first flange (106c) is configured to rest, in the extended state and when the at least one solenoid is in the off mode, on the second sealing ring (107b), and wherein the third portion (104c) includes a third portion second flange (105c) that extends inwardly along the radial axis, r, from the third portion (104c), and wherein a third sealing ring (107c) is coupled to an upper surface of the third portion second flange (105c); and
the fourth portion (104d) includes a fourth portion first flange (106d) that extends outwardly along the radial axis, r, from the fourth portion (104d), wherein the fourth portion first flange (106d) is configured to rest, in the extended state and when the at least one solenoid is in the off mode, on the third sealing ring (107c), and wherein the fourth portion (104d) includes a fourth portion second flange (105d) that extends inwardly along the radial axis, r, from the third portion (104c), and wherein the fourth portion second flange (105d) defines an outlet (110).

6. The frothing appliance (100) of claim 5, wherein:
a first magnetic or ferromagnetic material (108b) is included on a surface of the second portion first flange (106b);
a second magnetic or ferromagnetic material (108c) is included on a surface of the third portion first flange (106c); and
a third magnetic or ferromagnetic material (108d) is included on a surface of the fourth portion first flange (106d).

7. The frothing appliance (100) of claim 6, wherein:
when the at least one solenoid is in the on mode, the first magnetic or ferromagnetic material (108b) is within range of a magnetic field (MF) such that the second portion (104b) is configured to move into the recess (102a); and further wherein:
when the second portion (104b) is within the recess (102a), and when the at least one solenoid is in the on mode, the second magnetic or ferromagnetic material (108c) is within range of the magnetic field (MF) such that the third portion (104c) is configured to move into the recess (102a); and further wherein:
when the third portion (104c) is within the recess (102a), and when the at least one solenoid is in the on mode, the third magnetic or ferromagnetic material (108d) is within range of the magnetic field (MF) such that the fourth portion (104d) is configured to move into the recess (102a).

8. The frothing appliance (100) of any preceding claim, wherein the means for cleaning includes at least one nozzle (120) located in the recess (102a) of the housing (102).

9. The frothing appliance (100) of claim 8, wherein steam is provided from the at least one nozzle (120) and into the recess (102a).

10. The frothing appliance (100) of claim 9, further comprising:
at least one stop (140b, 140c, 140d) provided on the inner surface of the housing (102).

11. The frothing appliance (100) of any preceding claim, further comprising:
a spring (130) that extends from an inner surface of the housing (102) to the froth wand (104).

12. The frothing appliance (100) of claim 11, when dependent on claim 5, wherein the spring (130) extends from the inner surface of the housing (102) to an upper surface of the fourth portion first flange (106d).

13. A hot beverage dispensing machine, comprising:
the frothing appliance (100) of any preceding claim.

14. A method, the method comprising:
providing a housing having a recess;
providing a froth wand, wherein the froth wand has a longitudinal axis;
retracting the froth wand, along the longitudinal axis, into the recess of the housing; and
cleaning the froth wand when the froth wand is retracted into the recess of the housing.

15. A method of using the frothing appliance of claim 1, the method comprising:
activating the means for retracting the froth wand such that the froth wand is retracted fully or partially into the recess of the housing;
activating the means for cleaning when the froth wand is retracted fully or partially into the recess of the housing such that the froth wand is cleaned.
